# EUROPEAN PATENT APPLICATION

(11) **EP 4 187 854 A1**
(43) Date of publication of application: **31.05.2023**
(21) Application number: 22209853.5
(22) Date of filing: 28.11.2022
(51) Int. Cl.: H04L 9/40, H04W 12/00, H04W 92/02, H04W 88/16

(54) **MILITARY TRUSTED INTERWORKING FUNCTION TO INTEGRATE IP TACTICAL NODES INTO A 5G NETWORK**

(30) Priority: 29.11.2021 US 202117536972
(71) Applicant: Rockwell Collins, Inc., Cedar Rapids, IA 52498 (US)
(72) Inventor: RAJANIKANTHA, Naveen, Marion (US); BOUIS, Jeffrey D., Frisco (US); THOMMANA, John V., Cedar Rapids (US)
(74) Representative: Dehns

(57) **Abstract**

A system and method for implementing M-TIF to integrate one or more tactical nodes (202) as an integral part of a 5G network includes a tactical proxy (210) to interface with a TWIF. The tactical proxy (210) terminates wireless local area network interactions, eliminating the need for changes to the tactical waveform. Application layer messages between the tactical network node (202) and tactical proxy (210) are introduced to initiate, manage, and terminate sessions with the 5G Core.

## Description

### BACKGROUND

Cellular infrastructure is designed to support seamless multi-radio access terminal networks. Cellular user equipment (UE) can roam seamlessly between 5th generation (5G) / 4th generation (4G) / 3rd generation (3G) / 2nd generation (2G) networks, and the user equipment can utilize different services provided by the network infrastructure.

5G interworking with non-5G devices is defined via Non 3GPP Interworking Function (N3IWF), Trusted Non-3GPP Gateway Function (TNGF), Trusted Wireless LAN Interworking Function (TWIF), and Wireline Access Gateway Function (W-AGF). The main interfaces from the interworking function to a 5G core network is via N2 and N3 interfaces; the N3IWF, TNGF, and TWIF interface to a 5G UE or "Non-5G Capable Over WLAN" (N5CW) UE is over Wi-Fi. The interfacing of tactical radios without Wi-Fi interfaces is possible with a Military Trusted Interworking Function (M-TIF) that maintains the required N2 and N3 interfaces with the core network but terminates all the Wi-Fi related interworking functions at a proxy within the M-TIF. This eliminates changes to the tactical waveforms and related cryptographic functions within the tactical radio. However, no methodology exists to integrate one or more tactical nodes in a 5G network.

### SUMMARY

In one aspect, embodiments of the inventive concepts disclosed herein are directed to a system and method for implementing M-TIF to integrate one or more tactical nodes as an integral part of a 5G network. The M-TIF implements a tactical proxy to interface with a TWIF. The tactical proxy terminates wireless local area network interactions, eliminating the need for changes to the tactical waveform. Application layer messages between the tactical network node and tactical proxy are introduced to initiate, manage, and terminate sessions with the 5G Core.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
- FIG. 1: shows a block diagram of a system according to an exemplary embodiment;
- FIG. 2: shows a block diagram of a network including an exemplary embodiment;
- FIG. 3: shows a block diagram of data connectivity in a system according to an exemplary embodiment;
- FIG. 4: shows a block diagram of a system according to an exemplary embodiment;
- FIG. 5: shows a block diagram of a system according to an exemplary embodiment;
- FIG. 6: shows a block diagram of a system according to an exemplary embodiment;
- FIG. 7: shows a block diagram of a system according to an exemplary embodiment;

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a system and method for implementing M-TIF to integrate one or more tactical nodes as an integral part of a 5G network. The M-TIF implements a tactical proxy to interface with a TWIF. The tactical proxy terminates wireless local area network interactions, eliminating the need for changes to the tactical waveform. Application layer messages between the tactical network node and tactical proxy are introduced to initiate, manage, and terminate sessions with the 5G Core. The inventive concepts disclosed herein may be better understood with reference to U.S. Patent App. No. 17/443,518 (filed July 27, 2021) which is incorporated by reference.

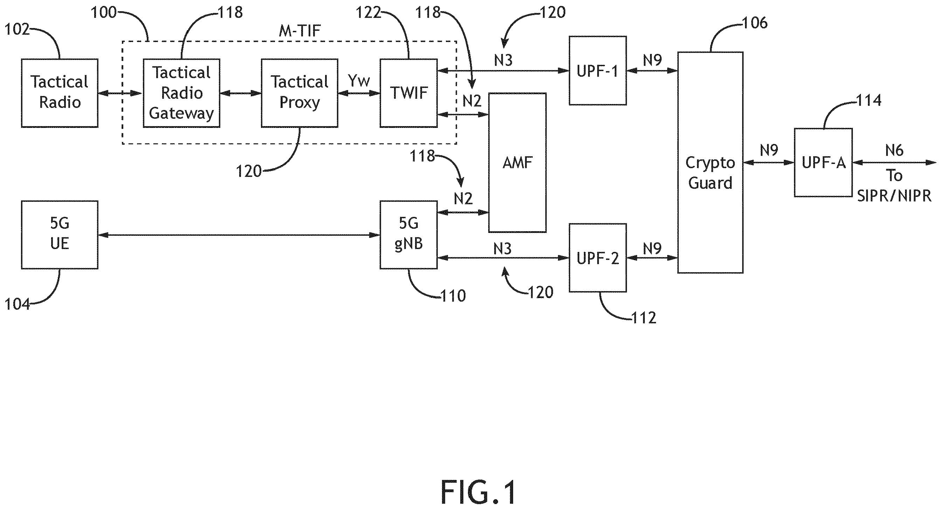

Referring to FIG. 1, a block diagram of a system (such as a tactical node in a network) according to an exemplary embodiment is shown. In a system with a tactical radio 102 attempting to access 5G functionality, an M-TIF 100 includes a tactical radio gateway 118, a tactical proxy 120, and a TWIF 122. The system may include 5G user equipment 104, distinct from the tactical radio 102.

In at least one embodiment, the system is configured as a N5CW device, and the M-TIF 100 uses the TWIF 122 to communicate with the core network; the core network may include one or more User Plane Function (UPF) devices 106, 112, 116, including one or more UPF devices 106, 112 corresponding to the number of networks being interfaced, and a UPF anchor (UPF-A) device 116. Furthermore, the core network may include at least one Access & Mobility Management Function (AMF) device 108, at least one cryptographic guard 114, and at least one 5G gNodeB (5G gNB) 110, some or all of which may be communicatively coupled at any given time via standard interfaces 118, 120 such as N2 and N3.

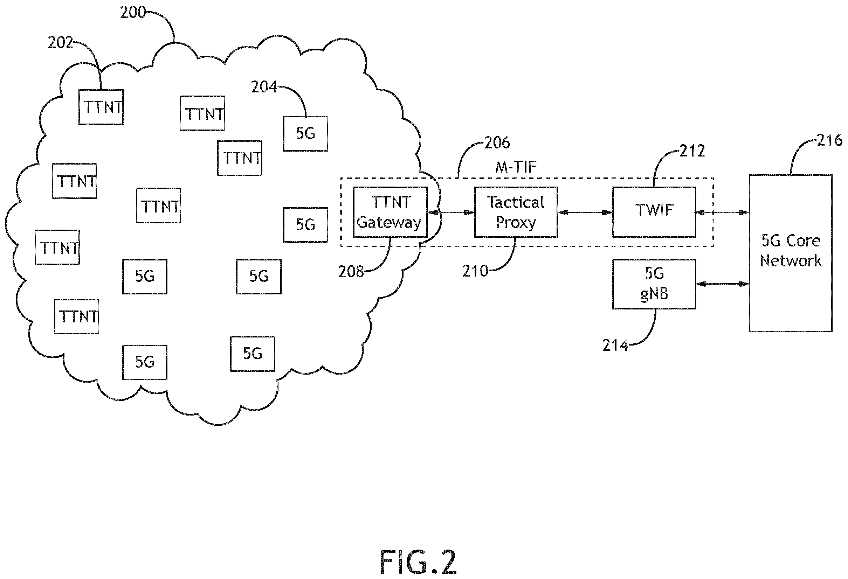

Referring to FIG. 2, a block diagram of a network including an exemplary embodiment is shown. A tactical military network 200 including TTNT nodes 202 may interface with a 5G core network 216 via an M-TIF 206 including a tactical radio gateway 208, a tactical proxy 210, and a TWIF 212. In at least one embodiment, a 5G gNB 214, M-TIF 206, and the components of the 5G Core Network 216 may be hosted on mobile platforms such as vehicles, ships, boats, unmanned arial vehicles, aircraft, etc. The TTNT nodes 202 of a TTNT network can interface to the 5G core network. The 5G user equipment 204 communicates with the 5G gNB 214 and the TTNT nodes 202 which require 5G network access by using the M-TIF 206 to gain access to the 5G core network 216. In at least one embodiment, the tactical military network 200 may comprise a United States protected network (e.g., at least one secret internet protocol router network (SIPRNET) and / or at least one non-classified internet protocol router network (NIPRNET), at least one radio access node (RAN) (e.g., at least one 5G RAN), and / or at least one mobile network, some or all of which may be communicatively coupled at any given time.

The system may include any suitable number and/or type of tactical military networks 200, and each tactical military network 200 may be configured to communicate via any suitable waveform(s) (e.g., a tactical targeting network technology (TTNT) waveform and / or a TSM waveform). For example, one or more of the tactical military networks 200 may be mobile ad-hoc networks (MANETs).

In at least one embodiment, the tactical military network 200 is an ad-hoc IP mesh network. Traditionally, both 5G UEs 204 and N5CW TTNT UEs 202 would be expected to have a universal subscriber identity module (USIM). Incorporating the USIM functionality into the TTNT node 202 would require substantial changes to the waveform and cryptographic functions, leading to waveform re-certification and crypto re-certification and can result in interoperability issues with standard TTNT radios. To obviate the need for re-certification, the tactical node gateway 208, which may be co-located on the platform with the gNB and core network, interfaces with the tactical proxy 210 and acts as a gateway router for all TTNT nodes 202 in the network that have been configured to be part of the 5G core 216 network. The connectivity between a TTNT nodes 202 and the tactical node gateway 208 can be single-hop or multi-hop through the ad-hoc network. The tactical proxy 210 includes the relevant security features to access the 5G core network 216 as a native 5G device. The tactical proxy 210 may establish multiple 5G data connections for different TTNT nodes 202 and different applications requiring different authentication. The tactical node gateway 208 does not require any direct 5G compatibility and all 5G specific data interactions are maintained between the 5G core network 216 and the tactical proxy 210.

In at least one embodiment, the only changes to each TTNT node 202 are applied at the application layer, which precludes incorporation of USIM functionality on the TTNT radio. The required USIM functionality is instead hosted on the Tactical Proxy 210.

Each TTNT node 202 may be any suitable network node, such as a terminal (e.g., an aircraft, a watercraft, a submersible craft, an automobile, a spacecraft, a satellite, and / or a train, or a manpack). Each TTNT node 202 may include at least one radio (e.g., at least one software-defined radio (SDR)), at least one processor, and at least memory for embodying processor executable code, some or all of which may be communicatively coupled at any given time. One or more of the TTNT nodes 202 may be considered analogous or equivalent to a non-5G capable over WLAN (N5CW) nodes. Each TTNT node 202 may use generic routing encapsulation (GRE) for control traffic and user plane traffic to a military trusted interworking function (M-TIF) device 206.

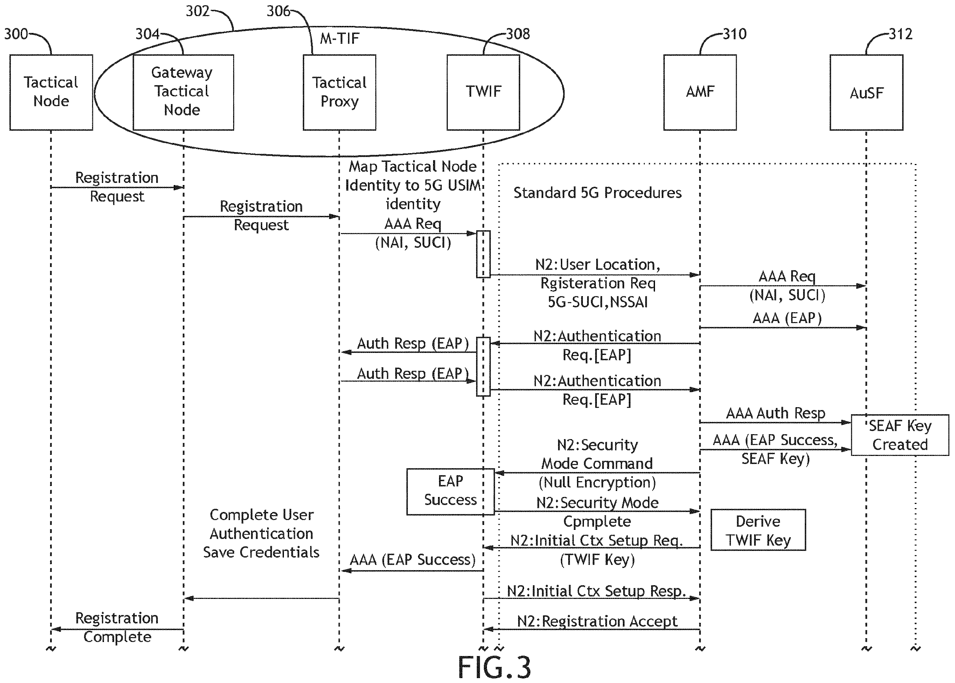

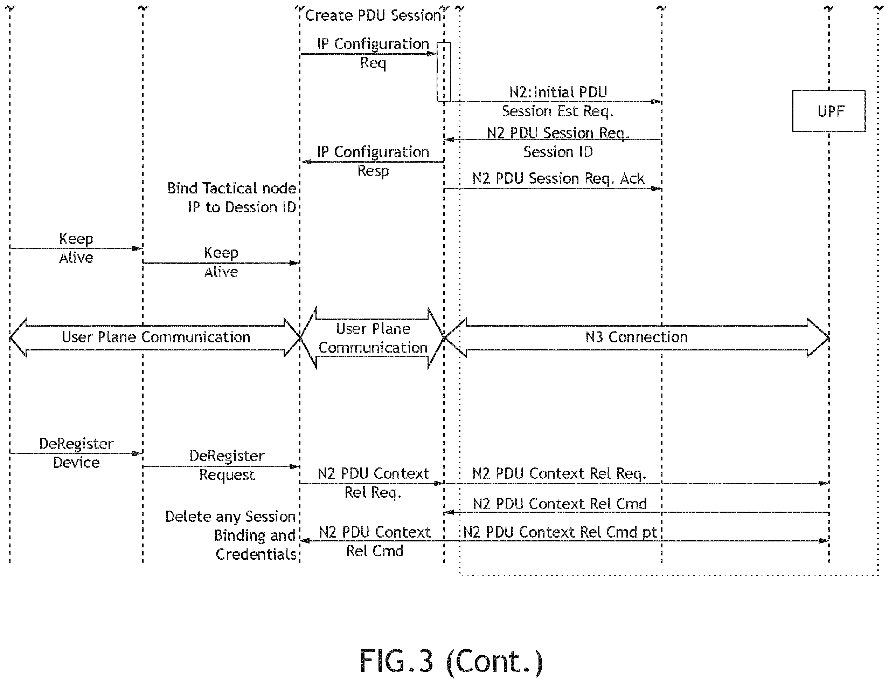

Referring to FIG. 3, a block diagram of data connectivity in a system according to an exemplary embodiment is shown. A TTNT node 300 can register with a 5G Core and become a part of the 5G network to support heterogeneous networking. A tactical proxy 306 terminates WLAN interactions, eliminating the need for changes to the tactical waveform. Application layer messages between the TTNT node 300 and the tactical proxy 306 are introduced to initiate, manage, and terminate sessions with the 5G Core. TTNT nodes 300 may also perform a "keep alive" function to maintain registration with 5G network. The tactical proxy 306 performs a session teardown and de-registration upon receiving a de-registration request or failure to receive the "keep alive" message from the TTNT node 300. The tactical proxy 306 manages all authentication between the TTNT node 300 and the 5G network such that the TTNT node 300 does not need to have any 5G authentication capability.

The TTNT node 300 may establish a communication session with the 5G Core network via the intermediary tactical node gateway 304 and tactical proxy 306 to handle authentication and security; in at least one embodiment, the tactical node gateway 304 and tactical proxy 306 may establish a plurality of data channels for multiple TTNT nodes 300, or applications, or both. In at least one exemplary embodiment, a UPF-3 device may handle TSM tactical military nodes, and traffic can be seamlessly routed between SIPRNET, NIPRNET, Military 5G, TTNT tactical military network, and TSM tactical military network.

In at least one embodiment, the M-TIF device 302 (including tactical node gateway 304, tactical proxy 306, and TWIF 308) may be collocated on a platform that hosts a 5G RAN and communicates with a collocated 5G Core network. Tactical node gateways 304, tactical proxies 306, and TWIFs 308 may be collocated or discrete and separate entities; the may optionally implement commercial domain security to secure the control plane and user plane traffic.

In at least one embodiment, appropriate cryptographic guards may be deployed between UPF-2 and UPF-A and between UPF-1 and UPF-A so that only authorized data can be exchanged between the 5G Core network 110 and the tactical proxy 306 for relay to the TTNT node 300 via the tactical node gateway 304. Additionally, interfaces may optionally be extended to incorporate Department of Defense (DoD) defined security and / or authentication mechanisms.

Some embodiments permit DoD to deploy a seamless heterogenous network of networks with inter-network routing. Entire tactical networks or selective users from tactical networks can be incorporated as analogous or equivalent to 5G N5CW devices that can register on demand with a tactical 5G Core network. Roaming across networks may be seamlessly supported.

The 5G Core network may further include the at least one AMF device 310, at least one SMF device, at least one UPF-1 device, at least one UPF-2 device, at least one UPF-Anchor (UPF-A) device, and / or the at least one cryptographic guard. The devices may be configured to perform any or all of the operations disclosed throughout via various software applications or computer code, and configured to execute various instructions or operations.

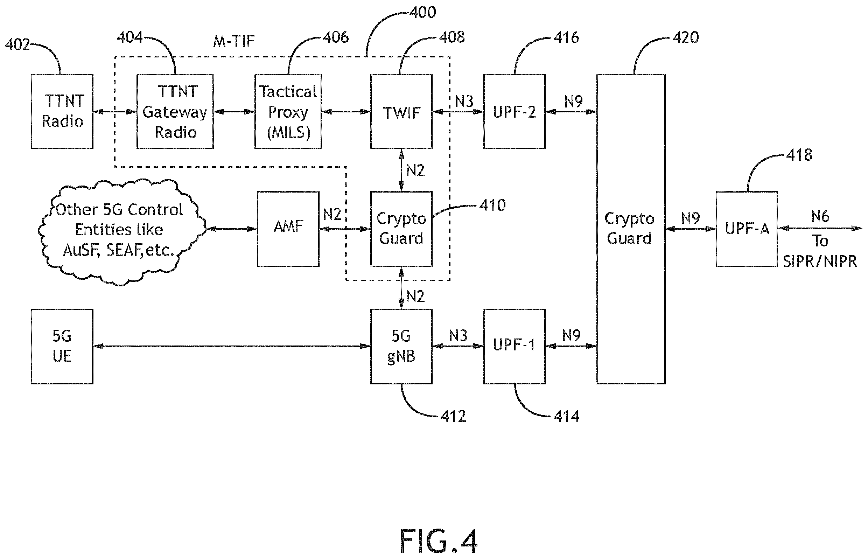

Referring to FIG. 4, a block diagram of a system according to an exemplary embodiment is shown. In one exemplary embodiment, the system may include an M-TIF 400 configured for multiple independent levels of security (MILS). Both the TTNT network and 5G network can be deployed at any security level. A TTNT radio 402 in a TTNT node establishes a data connection to the 5G network via a TTNT gateway radio 404 and intermediary tactical proxy 406 that includes necessary features for performing appropriate authentication to access 5G features. A crypto guard 410 between a TWIF 408 and 5G gNB 412 ensures that only controlled control information can be exchanged with the 5G Core. Similarly, the Crypto Guard 410, 420 logically interposed between UPF-1 414, UPF-2 416, and UPF-A 418 ensures that only controlled user traffic can be routed between the TTNT radio 402, 5G Core, and external networks (SIPRNET/NIPRNET).

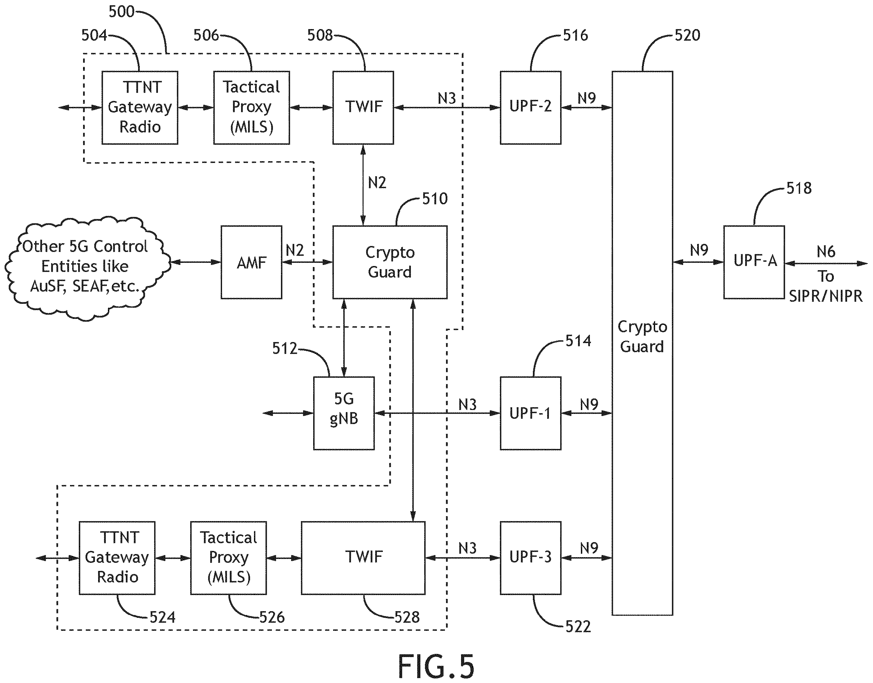

Referring to FIG. 5, a block diagram of a system according to an exemplary embodiment is shown. In at least one embodiment, additional networks at different security levels may be added to support heterogeneous networking. Multiple 5G Networks operating in different frequency bands or different configurations can also be accommodated. In at least one embodiment, one network may comprise TTNT network with another network may comprise a TSM network.

The system may include an M-TIF 500 encompassing multiple TTNT / TSM gateway radios 504, 524 and intermediary tactical proxies 506, 526 that include necessary features for performing appropriate authentication to access 5G features and maintain 5G connections for corresponding TTNT / TSM nodes via their respective TTNT / TSM gateway radios 504, 524. A crypto guard 510 between respective TWIFs 508, 528 and 5G gNB 512 ensures that only controlled control information can be exchanged with the 5G Core. Similarly, the Crypto Guards 510, 520 logically interposed between UPF devices 514, 516, 522, and a UPF-A device 518 ensures that only controlled user traffic can be routed between the TTNT / TSM nodes, 5G Core, and external networks (SIPRNET/NIPRNET).

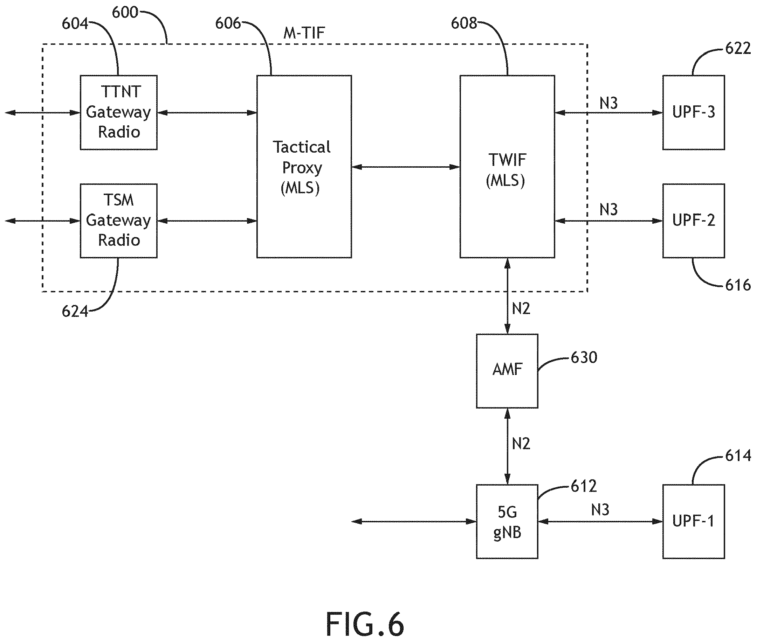

Referring to FIG. 6, a block diagram of a system according to an exemplary embodiment is shown. In at least one embodiment, an MLS M-TIF 600 may be used on MLS platforms. The 5G core network security architecture is unchanged. The system may include an M-TIF 600 encompassing a TTNT gateway radio 604 and a TSM gateway radio 624, each configured for data communication with an intermediary tactical proxy 606 that include necessary features for performing appropriate authentication to access 5G features and maintain 5G connections for corresponding TTNT nodes via their respective TTNT gateway radio 604 and TSM gateway radio 624. An MLS-capable TWIF 608 is logically interposed between the MLS tactical proxy 606 and UPF-1 614, UPF-2 616, UPF-3 622, UPF-A 618, an AMF device 630, and a 5G gNB 612.

Networks may operate at any classification. The tactical proxy 606 and the TWIF 608 are configured to handle multiple levels of classification traffic; if the tactical network cannot handle multiple levels of classification internally, then multiple tactical gateway radios 604, 624 are employed so that the tactical proxy 606 may route appropriate data on the appropriate network.

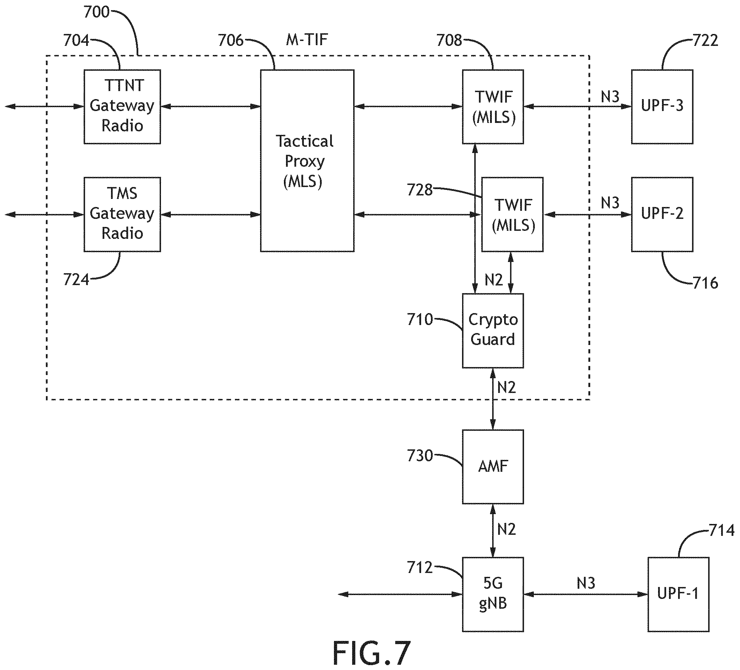

Referring to FIG. 7, a block diagram of a system according to an exemplary embodiment is shown. In order to leverage as many commercial off-the-shelf components as possible, in at least one embodiment, an MLS M-TIF 700 may be used on MLS platforms with an M-TIF 700 encompassing a TTNT gateway radio 704 and a TSM gateway radio 724, each configured for data communication with an intermediary tactical proxy 706 that include necessary features for performing crypto guard in addition to appropriate authentication to access 5G features and maintain 5G connections for corresponding TTNT nodes via their respective TTNT gateway radio 704 and TSM gateway radio 724; and separate TWIFs 708, 728 logically interposed between the tactical proxy 706 and UPF devices 714, 716, 722, 718, an AMF device 730, and a 5G gNB 712.

The TWIF 728 and UPF devices 714, 716, 722, 718 are MILS while only the Tactical proxy 706 is MLS. A crypto guard 710 is logically interposed between the TWIF 728 and the AMF 730. Furthermore, in at least one embodiment, a crypto guard is disposed between a UPF-A device and other UPF devices 714, 716, 722 so that traffic at different classification levels is kept separate and only appropriate traffic can be routed between them.

In at least one embodiment, the interfaces presented by the TNGF / N3IWF / TWIF towards the tactical proxy are slightly different, but the functions to be performed by the tactical proxy do not change. The tactical proxy originates and terminates all Wi-Fi related transactions expected by the Y2 /Ta / Yw interfaces to spoof the interworking function into functioning as though there is real 5G+Wi-Fi or Wi-Fi device at the other end.

In at least one embodiment, the tactical proxy hosts a UICC / USIM functionality and performs identity and authentication management on behalf of all tactical devices in the 5G network. The tactical proxy takes on this functionality, thereby keeping the 5G specifics from the tactical node and minimizing changes to tactical nodes.

In at least one embodiment, where a typical deployment of N5CW Layer 2 transport would be by Wi-Fi orchestrated by a TWAP and TWIF, the TWAP is redundant, as the tactical node and tactical proxy communicate over ethernet transport.

In at least one embodiment, the WLAN UE uses EAP-5G, IKEv2, and IPSEC to secure the control plane between the UE and TWIF, and GRE / IPSEC and GRE / ESP to secure the user plane. For secure networks where the tactical node gateway, tactical proxy, and TWIF are co-located on a secure platform, a GRE encapsulation can be used for user plane traffic between the tactical node and M-TIF. The control plane is terminated on the tactical proxy which is already collocated with TWIF on a secure platform, thus avoiding any control plane security aspects.

Embodiments of the present disclosure provide a secure and transparent method for 5G Identification and authentication of tactical nodes and IP-based networks. This functionality permits the DoD to deploy a seamless heterogenous network of networks with inter-network routing ability. Entire tactical networks or selective users from tactical networks can be incorporated as 5G N5CW devices that can register on demand with the tactical 5G network. Roaming across networks is seamlessly supported. Military security is retained. No details regarding frequencies, TRANSEC, COMSEC, etc., of the tactical network are available to the 5G network or the M-TIF. Policies dictate labeling of traffic to and from the M-TIF so that the tactical networks can appropriately route the information adhering to tactical networking standards.

It is believed that the inventive concepts disclosed herein and many of their attendant advantages will be understood by the foregoing description of embodiments of the inventive concepts disclosed, and it will be apparent that various changes may be made in the form, construction, and arrangement of the components thereof without departing from the broad scope of the inventive concepts disclosed herein or without sacrificing all of their material advantages; and individual features from various embodiments may be combined to arrive at other embodiments. The form herein before described being merely an explanatory embodiment thereof, it is the intention of the following claims to encompass and include such changes. Furthermore, any of the features disclosed in relation to any of the individual embodiments may be incorporated into any other embodiment.

## Claims

1. A system, comprising:
a tactical military network comprising:
one or more tactical nodes (202); and
a military trusted interworking function, M-TIF, device comprising:
a tactical node gateway (208) configured as a trusted network access node, TNAN, to a 5G core network; and
a tactical proxy (210) configured to establish one or more authenticated data connections to the 5G core network, and handle all data traffic between each of the one or more tactical nodes and the 5G core network,
wherein services of the 5G core network are accessible to the tactical nodes via the tactical node gateway and the tactical proxy.

2. The system of Claim 1, wherein the M-TIF device is configured to expose N2 and N3 interfaces to communicate with the 5G Core network.

3. The system of Claim 1 or 2, wherein the tactical nodes (202) use generic routing encapsulation, GRE, for control traffic and user plane traffic to the M-TIF device, and preferably wherein the M-TIF device is configured to host Universal Subscriber Identity Module, USIM, configuration for users of the tactical military network to perform proxy authentication, encryption, and session context management, and more preferably wherein the M-TIF device is configured to perform military security classification and labelling for communications to the tactical node gateway.

4. The system of any preceding Claim, further comprising one or more cryptographic guards, wherein:
the 5G Core network further includes at least one of a user plane function, UPF,-1 device or a UPF-2 device;
the 5G Core network further includes a UPF-Anchor, UPF-A, device;
the 5G Core network is connected to at least one United States protected network; and
the cryptographic guards are deployed between the at least one of the UPF-1 device or the UPF-2 device and the UPF-A device such that only authorized data is exchangeable between the tactical military network and the at least one United States protected network, and preferably wherein the at least one United States protected network is at least one of secret internet protocol router network, SIPRNET, or non-classified internet protocol router network, NIPRNET.

5. The system of any preceding Claim, wherein no security aspects of the tactical military network is available to the 5G core network.

6. The system of any preceding Claim, wherein the tactical military network is a mobile ad-hoc network, MANET.

7. The system of any preceding Claim, further comprising:
a second military trusted interworking function, M-TIF, device comprising:
a second tactical node gateway configured as a trusted network access node, TNAN, to the 5G core network; and
a second tactical proxy configured to establish one or more authenticated data connections to the 5G core network, and handle all data traffic between a subset of each of the one or more tactical nodes and the 5G core network.

8. The system of any preceding Claim, wherein tactical military network uses a first waveform, wherein the system further comprises a second tactical military network using a second waveform, the second tactical military network comprising a second set of one or more tactical nodes and a second tactical node gateway configured as a second TNAN to the 5G core network.

9. The system of any preceding Claim, wherein the tactical military network comprises a first tactical military network, and further comprising a second tactical military network, the first tactical military network and second tactical military network operating at different security classifications, and preferably wherein the M-TIF device is communicatively coupled to the tactical node gateway and the second tactical node gateway, wherein the tactical node gateway and the second tactical node gateway are collocated with the M-TIF device, wherein the M-TIF device supports (a) the interworking function between the tactical military network and the 5G core network and (b) a second interworking function between the second tactical military network and the 5G core network, and more preferably further comprising a second M-TIF device of the 5G core network, the second M-TIF device supporting a second interworking function between the second tactical military network and the 5G core network, the second M-TIF device communicatively coupled to the second tactical node gateway, wherein the second tactical node gateway is collocated with the second M-TIF device.

10. A method, comprising:
providing a tactical node gateway of a tactical military network, the tactical node gateway configured as a trusted network access node, TNAN, to a 5G core network, the tactical military network comprising one or more tactical nodes; and
providing a military trusted interworking function, M-TIF, device comprising:
a tactical node gateway configured as a trusted network access node, TNAN, to a 5G core network; and
a tactical proxy configured to establish one or more authenticated data connections to the 5G core network, and handle all data traffic between each of the one or more tactical nodes and the 5G core network,
wherein services of the 5G core network are accessible to the tactical nodes via the tactical node gateway and the tactical proxy.

11. A military trusted interworking function, M-TIF, device comprising:
a tactical node gateway (208) configured as a trusted network access node, TNAN (202), to a 5G core network;
a tactical proxy (210) configured to establish one or more authenticated data connections to the 5G core network, and handle all data traffic between each of the one or more nodes and the 5G core network; and
Trusted Wireless LAN Interworking Function, TWIF, device,
wherein services of the 5G core network are accessible to one or more nodes via the tactical node gateway and the tactical proxy.

12. The M-TIF of Claim 11, wherein:
the tactical proxy (210) is further configured to establish a first data connection to the 5G core network corresponding to a first application, and a second data connection to the 5G core network corresponding to a second application; and
the first application and second application require different levels security authentication.

13. The M-TIF of Claim 11 or 12, wherein the tactical proxy (210) is configured to spoof 5G core network security credentials.

14. The M-TIF of any of Claims 11-13, wherein the tactical node gateway (208) and tactical proxy (210) are collocated.

15. The M-TIF of any of Claims 11-14, further comprising one or more cryptographic guards logically interposed between the TWIF and the 5G core network to support multiple independent levels of security for individual data connections.
